# EUROPEAN PATENT SPECIFICATION

(11) **EP 2 221 519 B1**
(45) Date of publication and mention of the grant of the patent: **23.02.2011**
(21) Application number: 10165324.4
(22) Date of filing: 12.04.2006
(51) Int. Cl.: F16L 11/08

(54) **Flexible pipe**
Flexibles Rohr
Tuyau souple

(30) Priority: 20.04.2005 NL 1028820
(43) Date of publication of application: 25.08.2010
(62) Divisional of application: 06733061.3
(73) Proprietor: Trelleborg Ede B.V., 6718 ZD Ede (NL)
(72) Inventor: Knol, Dirk, 7421 LH Deventer (NL)
(74) Representative: Vernout, Robert

(56) References cited:
- DE-A1- 2 345 455
- DE-U1- 8 437 910
- FR-A- 792 388
- GB-A- 1 573 189

## Description

The invention relates to a flexible pipe for transporting abrasive slurry, comprising a tubular body of a flexible polymer, such as rubber, and a multitude of coaxial, wear-resistant rings provided in the polymer along the length of the tube, which rings and which tubular body have substantially the same internal diameter.

Such a pipe is known from DE 84 37 910.3 U1. The rings in said known pipe are of two different types arranged in alternating manner, each of triangular section, wherein the thickness near the inner circumference of the rings of the first type is larger than the thickness of the rings near their outer circumference, and the thickness near the inner circumference of the rings of the second type is smaller than the thickness of the rings near their outer circumference.

While the term "pipes" is used herein, the invention also relates to flexible expansion pieces, bends, reducing pieces and T-pieces. Many of these products are used as flexible couplings in pipes through which abrasive slurries are pumped. These products are used in, for example, the dredging industry, the sand and gravel extraction industry, the diamond mining industry and the oil-sand industry. Developments in the dredging industry have been such that increasingly abrasive mixtures are being pumped.

The invention also relates to new pipes which, before use, have a flexible (rubber) internal lining that covers the
wear-resistant rings, part of which flexible internal lining has worn away after the pipe has been used for some time, as a result of which the inner surface of the rings becomes exposed, so that the internal diameter of the rings and that of the tubular body are only at least substantially the same after some period of usage.

Pipes for slurry transportation are generally built up of an interior wearing layer of rubber (or another polymer), one or more inlays, possibly steel vacuum rings or a coil and an outer layer. The wear-resistant rings function to slow down the wearing process, for example by preventing sharp objects in the slurry cutting through the rubber wearing layer over a large distance.

Said rings are usually formed of steel plate, cut, rolled and welded. Common kinds of steel are used, but also high-tensile and wear-resistant kinds, such as Creusabro^{™} and Hardox^{™}.

The object of the invention is to provide a flexible pipe which is more resistant to wear and damage. To that end, in said pipe identical rings are used, wherein the thickness of the rings near their inner circumference is larger than the thickness of the rings near their outer circumference and the cross-section of the rings is trapezoidal.

Various properties of the pipe can be improved by using this configuration of the rings, such as the bending radius, the life and the stiffness. In particular the anchoring of the rings in the pipe is improved in this manner.

The rings are preferably made by moulding a heated, flowable metal or a ceramic powder in a mould. Cast iron, cast steel, a cast ceramic material and other materials that can be processed by means of a casting technique or sintering or pressing techniques may be used for this purpose. Such techniques enable a high degree of freedom in moulding this type of rings, such as the various rings discussed in the description.

The invention will now be explained in more detail in the following description of embodiments thereof, which are illustrated in the figures, in which:
Figure 1 is a schematic, longitudinal sectional view of a part of a flexible pipe provided with wear-resistant rings in various embodiments thereof;
Figures 2, 3 and 4 are cross-sectional views of various embodiments of a wear-resistant ring, which do not fall within the scope of the present invention.
Figure 5 is a schematic, longitudinal sectional view of a bent flexible pipe provided with wear-resistant rings according to one embodiment of the present invention; and
Figure 6 is a schematic, a longitudinal sectional view of a conical, flexible pipe provided with wear-resistant rings, which embodiment does not fall within the scope of the present invention.

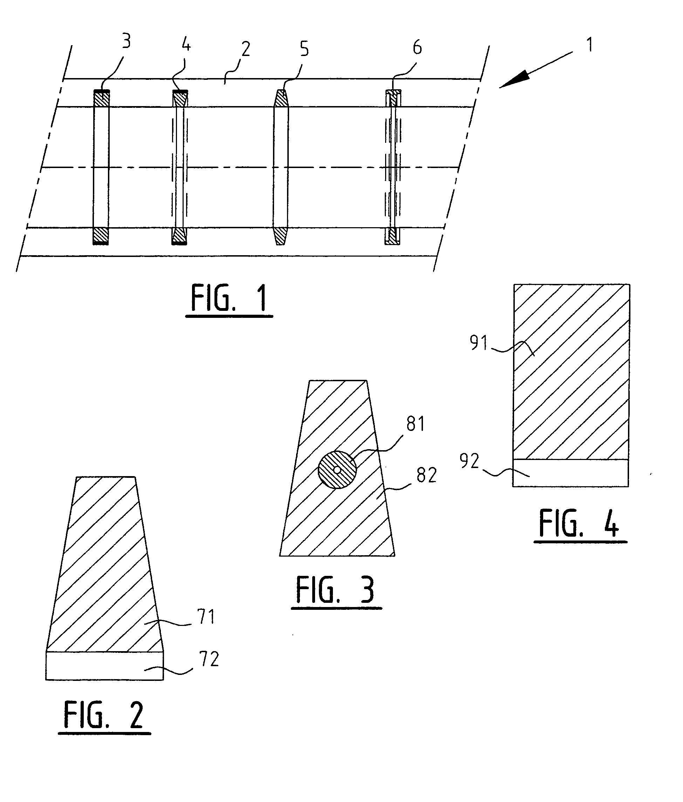

According to figure 1, a flexible pipe 1 that is used in dredging comprises a rubber tubular part 2, which is provided with wear-resistant rings 3, 4, 5, 6 in various embodiments thereof. Figure 1 is merely a schematic representation, in a practical embodiment identical wear-resistant rings 3, 4, 5, 6 will generally be used. Furthermore, besides the rubber tubular part 2 and the rings 3, 4, 5, 6, a flexible pipe 1 will usually also comprise at least an outer layer arranged around the rubber part 2.

The wear-resistant rings 3, 4, 5, 6 are provided in coaxial, regularly spaced-apart relationship in the rubber part 2, with the rings 3, 4, 5, 6 and the rubber part 2 having the same internal diameter, so that a substantially smooth inner surface of the flexible pipe 1 alternately consisting of rubber and a wear-resistant material is obtained. The outer surface of the rubber part 2 only consists of rubber.

The wear-resistant ring 3 is of rectangular section. This embodiment does not fall within the scope of the currently claimed invention. The wear-resistant ring 4 is of trapezoidal section, with the thickness of the ring 4 being smaller near the inner diameter than near the outer diameter. This embodiment does not fall within the scope of the currently claimed invention. The wear-resistant ring 5 is of trapezoidal section, with the thickness of the ring 5 being larger near the inner diameter than near the outer diameter. The wear-resistant ring 6 has a T-shaped section, with the thickness of the ring 6 being smaller near the inner diameter than near the outer diameter. This embodiment does not fall within the scope of the currently claimed invention.

According to figure 2 and figure 3, the rings whose shape corresponds to that of the ring 4 of figure 1, is made of materials having two different hardnesses. The ring of figure 2 consists of a subring 71 of a hard, highly wear-resistant material such as hardfacing steel along the inner circumference, and a subring 72 of a ductile, less breakable material such as mild steel along the outer circumference. The ring of figure 3 consists of a hollow ring 82 of a hard, highly wear-resistant material such as hardfacing steel, the cavity of said ring being filled with a ring 81 of circular section made of a ductile, less breakable material, such as mild steel. In figure 4, too, the ring is built up of subrings 91, 92 of materials having two different hardnesses, similar to the ring of figure 2, with this difference that the ring is of rectangular section.

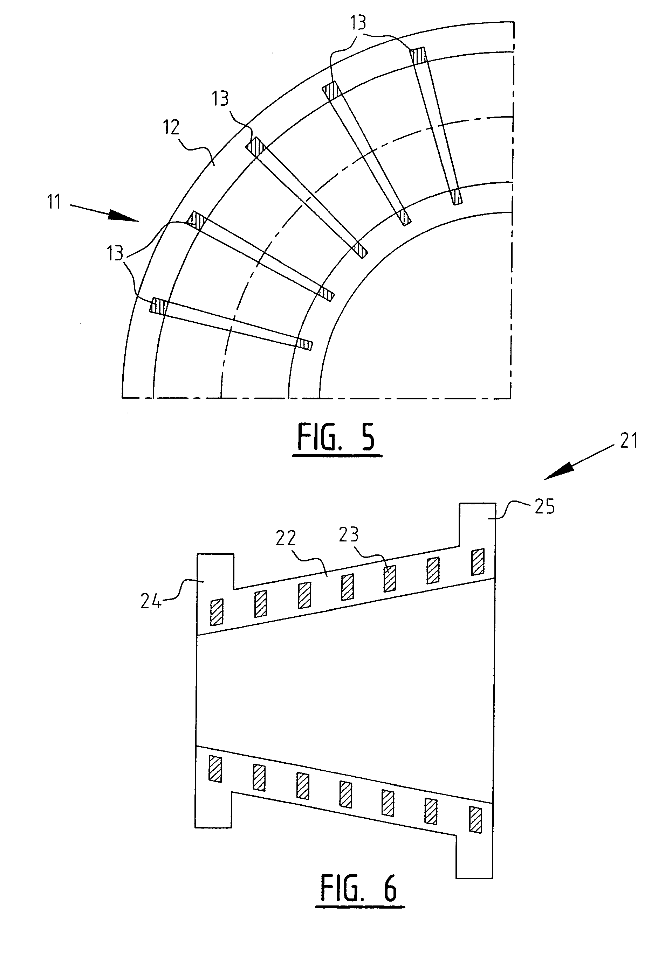

In figure 5, the bent flexible pipe 11 that is used in dredging comprises a rubber, tubular part 12, which is provided with several wear-resistant rings 13. Figure 5 is merely a schematic representation, besides the rubber tubular part 12 and the rings 13, a practical embodiment of a flexible pipe 11 will usually also comprise at least an outer layer arranged around the rubber part 12.

The wear-resistant rings 13 are provided in coaxial, regularly spaced-apart relationship in the rubber part 12, with the rings 13 and the rubber part 12 having the same internal diameter, so that a substantially smooth inner surface of the flexible pipe 11 alternately consisting of rubber and a wear-resistant material is obtained. The outer surface of the rubber part 12 only consists of rubber.

The thickness of the wear-resistant ring 13 is smaller in the inside bend of the pipe than in the outside bend. As a result, the ring 13 is trapezoidal in section in the outside bend, with the thickness of the rings 13 being smaller near the inner diameter than near the outer diameter. In the inside bend, the ring 13 is trapezoidal in section, with the thickness of the rings 13 being larger near the inner diameter than near the outer diameter.

According to figure 6, a flexible reducing piece 21 comprises a rubber tubular part 22, whose inner wall and outer wall extend conically, parallel to each other, with a flange 24, 25 being present at the two ends. Wear-resistant rings 23 are provided in the rubber of the conical tubular part 22. Said wear-resistant rings 23 are likewise conical in shape, so that they have a parallelogram-shaped section, such that the inner walls of the conical rings 23 extend parallel with respect to the inner wall of the conical tubular part 22. This embodiment does not fall within the scope of the currently claimed invention.

It can be seen that in the case of the rings shown in figure 6 the inner walls of the rings 23 do not lie in the same plane as the inner wall of the tubular part 22, but that, on the contrary, the rings 23 are surrounded by rubber. Said rubber can wear away in practice, as a result of which the rings 23 will come to lie at the inner surface of the pipe 22 yet. This aspect may also apply to the embodiments that have been previously discussed.

## Claims

1. A flexible pipe (1) for transporting abrasive slurry, comprising a tubular body of a flexible polymer, such as rubber, and a multitude of coaxial, wear-resistant rings (5, 13) provided in the polymer along the length of the tube, which rings (5, 13) and which tubular body have substantially the same internal diameter, **characterised in that** in said pipe identical rings are used, wherein the thickness of the rings (5, 13) near their outer circumference is smaller than the thickness of the rings (5, 13) near their inner circumference and the cross-section of the rings (5, 13) is trapezoidal.

2. A flexible pipe according to claim 1, wherein the rings (5, 13) are made of cast iron .

## Patentansprüche

1. Flexibles Rohr (1) zum Transportieren von abrasivem Schlamm, umfassend einen röhrenförmigen Körper aus einem flexiblen Polymer, wie etwa Gummi, und eine Mehrzahl koaxialer, abriebbeständiger Ringe (5, 13), die im Polymer entlang der Länge des Rohres vorgesehen sind, wobei die Ringe (5, 13) und der röhrenförmige Körper im wesentlichen den gleichen Innendurchmesser aufweisen, **dadurch gekennzeichnet, dass** im Rohr identische Ringe verwendet werden, wobei die Dicke der Ringe (5, 13) nahe ihrem Außenumfang geringer ist als die Dicke der Ringe (5, 13) nahe ihrem Innenumfang und der Querschnitt der Ringe (5, 13) trapezförmig ist.

2. Flexibles Rohr nach Anspruch 1, wobei die Ringe (5, 13) aus Gusseisen hergestellt sind.

## Revendications

1. Tuyau souple (1) pour transporter une bouillie abrasive, comprenant un corps tubulaire en polymère souple, tel que du caoutchouc, et une multitude de bagues (5, 13) coaxiales résistant à l'usure placées dans le polymère sur la longueur du tube, lesquelles bagues (5, 13) et lequel corps tubulaire présentent sensiblement le même diamètre interne, **caractérise en ce que** dans ledit tuyau, des bagues identiques sont utilisées, dans lequel l'épaisseur des bagues (5, 13) près de leur circonférence externe est plus petite que l'épaisseur des bagues (5, 13) près de leur circonférence interne, et la section transversale des bagues (5, 13) est trapézoïdale.

2. Tuyau souple selon la revendication 1, dans lequel les bagues (5, 13) sont en fonte.
